Europäisches Patentamt

European Patent Office

Office européen des brevets

(19)

(11) Publication number: **0 485 630 A1**

## EUROPEAN PATENT APPLICATION
## published in accordance with Art. 158(3) EPC

(12)

(21) Application number: **91910283.0**

(22) Date of filing: **31.05.91**

(86) International application number:
**PCT/JP91/00733**

(87) International publication number:
**WO 91/18756 (12.12.91 91/28)**

(51) Int. Cl.5: **B60K 17/00, B60K 17/28, B60K 25/06, E01C 23/00**

(30) Priority: **05.06.90 JP 147562/90**

(43) Date of publication of application:
**20.05.92 Bulletin 92/21**

(84) Designated Contracting States:
**DE ES FR GB IT NL**

(71) Applicant: **YUTANI HEAVY INDUSTRIES, LTD.**
**12-4, Gion 3-chome, Asaminami-ku**
**Hiroshima-shi, Hiroshima 731-01(JP)**
Applicant: **ABE, Kei**
**7-11-10, Tokiwadai, Matsudo-shi**
**Chiba 270(JP)**

(72) Inventor: **ABE, Kei, 7-11-10, Tokiwadai**
**Matsudo-shi**
**Chiba 270(JP)**
Inventor: **YANO, Katsuji, 905, Hujisatocho**
**Meito-ku**
**Nagoya-shi Aichi 465(JP)**
Inventor: **OSHIMA, Yoichi, 5-4-4, Nagatsuka**
**Asaminami-ku**

**Hiroshima-shi Hiroshima 731-01(JP)**
Inventor: **KASA, Hidetomo, 3-41-13, Aita**
**Asaminami-ku**
**Hiroshima-shi Hiroshima 731-01(JP)**
Inventor: **IGARASHI, Takashi, Dept. of**
**Technology,**
**Iseki & Co., Ltd. 1, Yakura**
**Tobecho Iyo-gun Ehime 799-26(JP)**
Inventor: **HUJIOKA, Yasuhiro, Dept. of**
**Technology,**
**Iseki & Co., Ltd. 1, Yakura**
**Tobecho Iyo-gun Ehime 799-26(JP)**
Inventor: **MIZUMOTO, Takeshi, Dept. of**
**Technology,**
**Iseki & Co., Ltd. 1, Yakura**
**Tobecho Iyo-gun Ehime 799-26(JP)**

(74) Representative: **Leale, Robin George**
**FRANK B. DEHN & CO. Imperial House 15-19**
**Kingsway**
**London WC2B 6UZ(GB)**

(54) **SELF-PROPELLED WORK VEHICLE.**

(57) A self-propelled work vehicle serving as the power source for various work tools required for a small-scale construction, capable of facilitating loading and unloading and of mounting loads stably with no limitation in length. The work vehicle according to the present invention is provided between the frames (4, 4) of right and left propelling devices (1, 1) thereof with an engine (9), a clutch (10), a transmis-sion case (11), a generator (13) and so forth, and further, provided on the top portion of the frames (4, 4) thereof with a flat base plate (2). The main body of the machine is provided thereon with power take-off means such as a PTO shaft (14) and a plug receptacle (22), thus serving as power sources for various work tools.

EP 0 485 630 A1

1

Technical Field:

This invention relates to a service car which takes out electric power and mechanical turning force power by utilizing the power of an engine for running a self-propelling car, and can be used for operating tools carried with a machine body at a desired place and for transporting materials and equipment.

Background Art:

Conventional machines used for mechanized execution of works in civil engineering and construction are employed on the premise that the scale of works at the site is at least a medium scale and profitability is insured even when exclusive machines suitable for a given kind of works are used, and in the works of a limited scale, man-power execution has been dominant from the aspect of economy, too. Recently, however, due to labor shortage for man-power execution and demands for the reduction of a term of works, even works of a limited scale must be switched to a mechanized execution, and handy tools for various works of the type which receive the supply of power from others, such as carry-on tools, have been developed.

Electricity, an air pressure, a hydraulic pressure, a water pressure or a mechanical turning force is used as the driving source of these service tools, and a generator, an air compressor, a hydraulic unit, a water pressure unit for a flexible shaft for transmitting directly the turning force are carried in. However, most of them are of an exclusive engine driving type, and they are combined with one another to execute works of one kind. Small tools are mostly used for works of a limited scale, though varying with the scale of works and the size of service tools. Therefore, the reduction of noise during the operation is not always sufficient.

Under the circumstances described above, the kinds of works utilizing service tools has recently been diversified, and it is very usual that a single power transmission medium in one site of work cannot sufficiently cope with works. In addition, in those type of works where the site of works often changes, various disadvantageous occur frequently. Consider, for example, a maintenance and repair work of a road of a limited scale. When a small amount of a ready-mixed concrete is intermittently necessary for replacing curbstones, a compact pot mixer is effective for kneading at the site, but most of the powers for driving this pot mixer are an electric motor. Hence, a dynamotor must be simultaneously carried into the site. Though an electric welding machine is necessary for tack welding reinforcing steels and timberings, a steady electric power supply can be rarely obtained at the site of works of a limited scale and there is no way but to use the dynamotor. Besides the examples described above, the service tools that need electric power include a concrete vibrator used at the time of concrete pouring and a core boring machine for confirming quality of the concrete poured.

As another kind of works, a carry-on breaker is used for removing a concrete pavement roadbed, an asphalt pavement roadbed or concrete structures such as side-ditches and catch pits unless the work can be executed without introducing full-scale exclusive machines. This means that a portable compressor for obtaining compressed air for operating this breaker is carried into the site, and if a plurality of kinds of works exist in one site of works, various kinds of machines must be taken in and their occupying space is necessary.

As described above, even in the case of the works of the limited scale, the kinds of service tools used are diversified unless the work is executed by the man-power work using conventional picks and scoops. Therefore, a generator for directly obtaining the turning force, and electric power generation means of the motor for obtaining a fluid pressure source such as a hydraulic power unit and a portable compressor are necessary as their power source. Depending on the kind of tools, it is often desired to obtain direct mechanical turning force. In such a case, it has been customary conventionally to carry a combination of machines as one set such as respective tools and an engine-driving type power unit into the site of works, but particularly when the scale of the works is small or when the site is moved with the execution of works, it is very difficult to transport a large number of machines and to secure their installation spaces.

A conventional self-propelling service car has a large road clearance of its engine unit and the engine unit protrudes above a bed plate. Therefore, it impedes loading and unloading of cargoes and cannot stably load elongated cargoes.

Accordingly, the present invention is directed to provide a self-propelling service car which serves as a driving source for various service tools necessary for works of a limited scale, and is equipped with a flat bed plate on the upper surface of its machine body.

Disclosure of the Invention:

The self-propelling service car of this invention is a service car which includes; a bed plate which is supported by travelling devices and the upper surface of which is flat throughout its full length, and an engine as a driving source for driving the travelling devices and running power transmission means that are disposed in the space defined between the frames constituting the travelling devices and the flat bed plate; and which can move back and forth, stop and change its direction. Electric power generation means, mechanical power output means, power transmission means for connecting the power of the engine to each of these means and operation means capable of controlling the engine, the travelling devices and the power transmission means are disposed in the space described above in such a manner that they do not protrude upward from the flat bed plate on the upper surface of the machine body.

When service tools suitable for a plurality of kinds of works are necessary for these works, respectively, the operation means for controlling the travelling devices of the self-propelling service car of the present invention is operated, and various materials and equipment are loaded onto the flat bed plate together with the necessary service tools and are carried into the site of works. After they are carried into the predetermined site, the works are carried out by connecting the power input portion of the necessary service tools to the power output portion on the bed plate.

When service tools requiring the electric power supply are used, for example, operation means of a clutch device connected to electric power generation means, that is, a generator, is operated so as to transmit the power of the engine to the generator. For those service tools which directly require mechanical power, operation means for taking out the mechanical power is operated in accordance with the function described above. At this time, since a plurality of power output means are disposed, a plurality of service tools may simultaneously be operated within the capacity of the engine and the generator.

Accordingly, when applied to the works involving machanical execution works of many kinds, one set of the service car of this invention can provide all of the electric power, the fluid pressure power and the mechanical power, and one or plurality of them can be simultaneously used, so that the kinds of use of the service tools can be expanded. Moreover, it is not necessary to prepare and transport exclusive machines for the different power sources as has been necessary in the prior art. Since the service car of this inveniton can run by itself, it needs a minimum necessary space and hence, is economical and particularly effective for those works the site of which moves sequentially.

Since the travelling devices are constituted by fitting the sprockets, to which the power from the running power transmission means is transmitted, and the follower wheels capable of idle rotation, to both sides of a pair of right and left frames and by passing crawlers around the respective sprockets and follower wheels. Accordingly, the travel of the machine body can be secured even when any corrugations exist on the ground of the site of works or the ground is hazardous such as muddy grounds.

Since the engine unit such as the engine, the running power transmission means, the electric power generation means and the mechanical power output means, is disposed substantially horizontally, no protruding portions exist on the upper surface of the machine body and this upper surface becomes a flat bed plate. Therefore, loading and unloading of cargoes can be made easily and the cargoes can be loaded stably. Various service tools can be transported into the site or can be operated while they are fastened by set metals.

The control panel for controlling the travel of the machine body or controlling the engine unit is disposed on the handle capable of freely turning in the longitudinal direction of the machine body, or is removably disposed on an arbitrary side of the front and rear sides of the machine body. Therefore, an operator can take his position on the suitable side in the travelling direction of the machine body, and can make the safe and reliable operation.

The support poles are implanted at the upper part of the flat bed plate and are allowed to rotate freely in the horizontal direction, the arms are so diposed to the side of the support poles as to protrude therefrom and the suspension means for the cargoes are provided to the arms. Accordingly, when the support poles are implanted onto the bed plate and the suspension means is disposed, loading and unloading of even the cargoes having a heavy weight and large service tools can be made easily.

In this way, various desired service tools can be easily carried in by one set of the machine and can be used. The control of the travel of the machine body and the control of the various power generation means can be remote controlled from an arbitrary position in front and at the back of the machine body. Therefore, the service car can easily pass even through a narrow entrance path and can safely travel without changing the direction of the machine body when it comes in and goes out.

Brief Description of Drawings:

Fig. 1 is a side view of the first preferred embodiment of the self-propelling service car according to the present invention.

Fig. 2 is a plan view of the first embodiment of the self-propelling service car.

Fig. 3 is a plan view of the principal portions of a control panel in the first embodiment.

Fig. 4 is a sectional view taken along A - A in Fig. 3.

Fig. 5 is a side view of the second embodiment of the self-propelling service car.

Fig. 6 is a partial cut-away plan view of the second embodiment of the self-propelling service car.

Fig. 7 is a partial cut-away front view of the second embodiment of the self-propelling service car.

Fig. 8 is a side view of the third embodiment of the self-propelling service car.

Fig. 9 is a partial cut-away plan view of the third embodiment of the self-propelling service car.

Fig. 10 is a side view of the fourth embodiment of the self-propelling service car.

Fig. 11 is a plan view of the fourth embodiment of the self-propelling service car.

Fig. 12 is a side view of the fifth embodiment of the self-propelling service car.

Fig. 13 is a plan view of the fifth embodiment of the self-propelling service car.

Fig. 14 is a plan view of the principal portions of the control panel of the fifth embodiment of the self-propelling service car.

Fig. 15 is a side view of the sixth embodiment of the self-propelling service car.

Fig. 16 is a plan view of the sixth embodiment of the self-propelling service car.

Fig. 17 is a perspective view of the seventh embodiment of the self-propelling service car.

Fig. 18 is a side view of the eigth embodiment of the self-propelling service car.

Best Mode for Carrying Out the Invention:

In order to explain in further detail this invention, the present invention will be explained in detail with reference to the accompanying drawings.

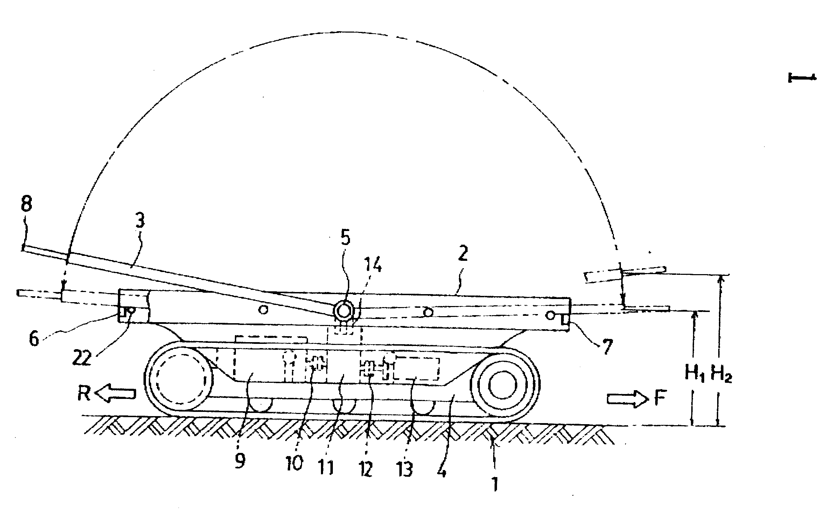

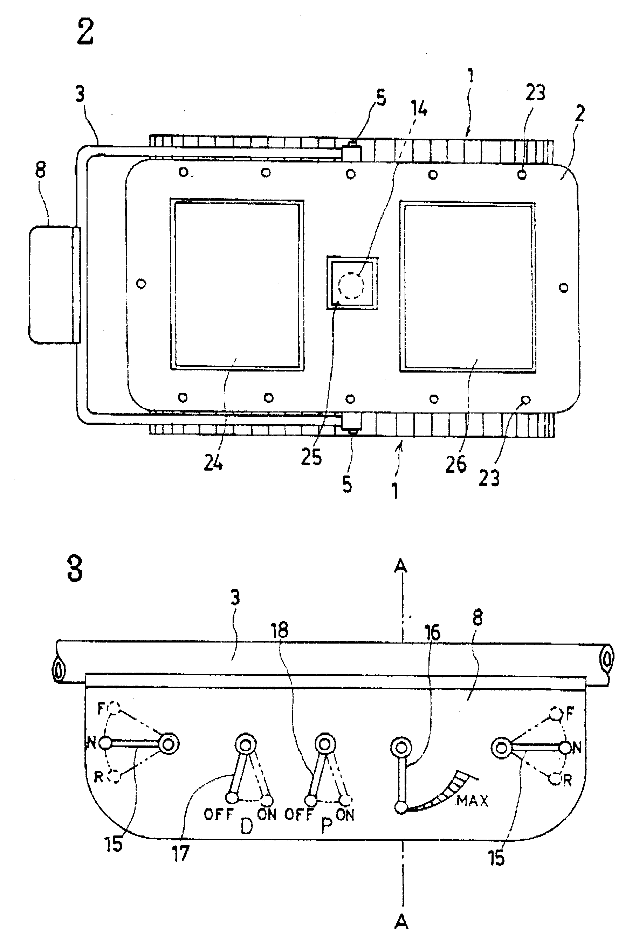

Figs. 1 to 4 show the first embodiment of the self-propelling service car. In Figs. 1 and 2, reference numeral 1 represents a crawler type travelling device; 2 is a flat bed plate at the uppermost part of a machine body; 3 is a hand guide type handle obtained by shaping a material having a light weight and rigidity such as a steel pipe into a U-shape; and 4 is a frame of the travelling device 1.

The end portion of the handle 3 on the open side is rotatably fitted to handle shafts 5, 5 which are so fitted to the substantial center portions of both right and left sides of the machine body as to protrude therefrom, is capable of turning in both advancing and retreating directions of the machine body with the handle shaft 5 being the center, and can rotate by about 180° until it strikes front and rear stoppers 6 and 7. The U-shaped bottom of the handle 3 is the portion which an operator grips when he operates the present apparatus. It is preferred that the height of the grip portion can be adjusted and fixed in a plurality of stages in accordance with the physical structure of the operator or with the materials which are loaded. A control panel 8 equipped with later-appearing operation means is fixedly disposed outside the U-shaped bottom of the handle 3.

On the other hand, an engine 9 is mounted into the space between the bed plate 2 and right and left frames 4, 4 disposed on the lower surface of the bed plate 2, and running power transmission means consisting of a clutch 10 and a transmission case 11 is connected to the front part of the engine. One of the output shafts of the transmission case 11 drives a generator 13 as electric power generation means through the clutch 12, and the other output shaft is a PTO shaft 14 as mechanical power output means. This PTO shaft 14 is disposed in a vertical direction and is so arranged as to take out the power from the center of the bed plate 2 as shown in Fig. 2. However, the PTO shaft may be changed to a horizontal shaft or a plurality of PTOs may be disposed by changing the structure of the transmission case 11, whenever necessary.

The clutches 10 and 12 described above function to connect and disconnect the rotating power of the engine 9 in accordance with an instruction signal, and auxiliary devices of different types such as a slip ring, a rotary joint, a cam, a release bearing, and so forth, are additionally provided to the clutches 10 and 12 in accordance with the kind of signal media.

Though omitted in Fig. 1, there is the case where a flexible shaft is additionally connected as a service tool to the PTO shaft as the mechanical power output means or a clutch device for driving the service tools is additionally provided when tools directly using the turning force exist as the service tools, such as a grinder, a buff, and so forth.

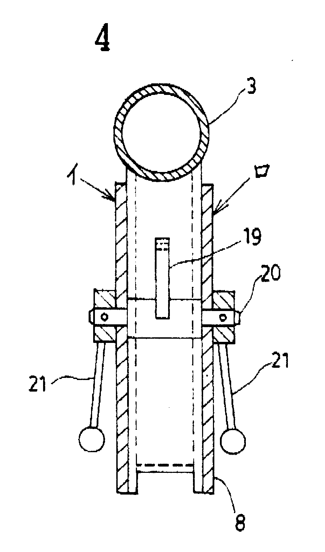

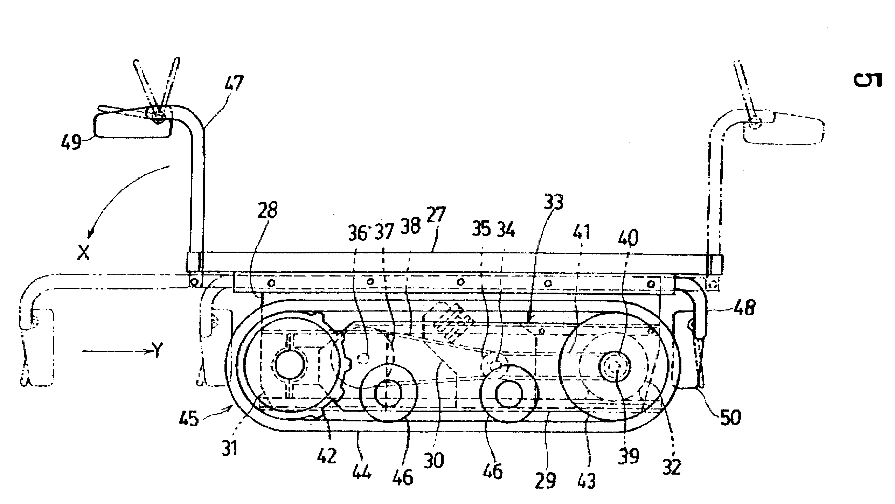

Fig. 3 is a plan view showing an example of the arrangement of various operation means to be disposed on the control panel 8 described already, and Fig. 4 is a sectional view taken along line A - A of Fig. 3. In Fig. 3, reference numerals 15, 15 represent controllers for controlling the travelling device 1. When the controller is shifted from an N position to an F or R position in the drawing, the machine body is self-propelled to a desired position and in a desired direction by rotating sprockets for driving right and left crawlers either individually or simultaneously, or by rotating both forwardly and reversely only one of them. Reference numeral 16 represents a controller for controller the engine 9; 17 is a controller for generating an instruction signal to the clutch 12 for the generator 13; and 18 is a controller for generating an instruction signal to the clutch 10 disposed between the engine 9 and the transmission case 11. The number of these controllers and their arrangement can be naturally increased or decreased or changed appropriately, whenever necessary.

As shown in the section of Fig. 4, each of the controllers 15, 16, 17 and 18 fundamentally comprises a lever shaft 20 which penetrates through both sides of the control panel 8 and has an operation arm 19 at the intermediate portion, and levers 21, 21 which are fitted to both end portions of the lever shaft 20 so that the lever shaft 20 can be rotated from both sides of the control panel 8, although the shape of the controller somewhat changes in accordance with the difference of the shape of the controllers of the apparatus to be operated and with the difference of the media of the instruction signals. The control operation of each apparatus is made by operating either one of these levers 21, 21.

Electric power output means consisting of a plug socket 22, and the like, are disposed at a plurality of positions on the side surface of the bed plate 2. A plurality of set metals 23 of a burying type for fastening the service tools and materials to be loaded onto the bed plate 2 and covers 24, 25, 26 for maintenance are disposed on the upper surface of the bed plate 2 as shown in Fig. 2.

The first embodiment of the present invention has the construction as described above. Service tools suitable for various services such as various electric tools, a portable compressor, a hydraulic power unit and various service tools actuated by the fluid pressure power generated by the compressor and the power unit, tools actuated by the mechanical power of the PTO, and the like, are loaded onto the bed plate 2 of the present apparatus with necessary materials and equipments, and after all of them are fastened by the set metals 23, the present apparatus travels by its own power to the service site. At this time, the levers of the controllers 15, 15 for controlling the travelling device on the control panel 8 are operated in combination to either of the positions F, R and N, the machine body can naturally move back and forth, stop and change the direction. When it moves in the direction of arrow F in Fig. 1, for example, the handle 3 is rotated counter-clockwise and tilted and when it moves in the direction of arrow R, the handle 3 is rotated clockwise and tilted. Furthermore, the height of the grip portion of the handle 3 is suitably adjusted to $H_1$, $H_2$, etc, in accordance with the physical structure of the operator.

In this way, the operator can safely drive while viewing straight the travelling direction of the machine body. When it is more desired for the operator to first confirm the ground of the entrance road by foot and then to travel the machine body, the handle 3 may be set to the direction opposite to the above. In any of the cases described above, since the levers 21 are disposed on both sides of the control panel 8, the levers 21 not only of the controllers 15 but also of the controllers 16, 17, 18, etc, can be easily operated when the handle 3 is in any direction.

Next, when the service car arrives at a predetermined service site, the position of the handle 3 is set to a position at which it does not impede the service operation, and the service work can be efficiently executed by simultaneously operating the service tools connected to the PTO shaft 14 and to the electric power output means 22 by operating the controllers 16, 17, 18.

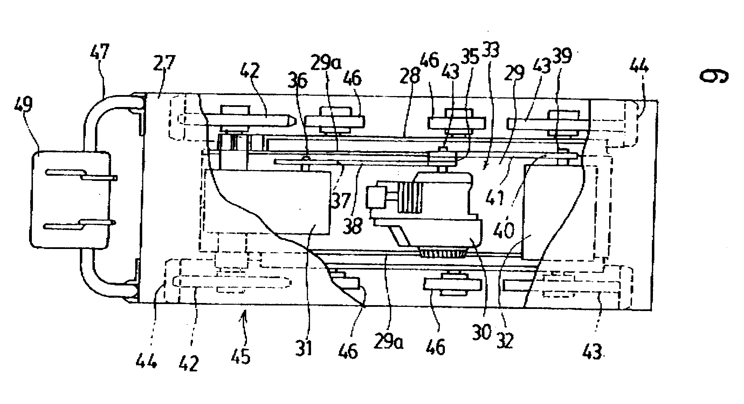

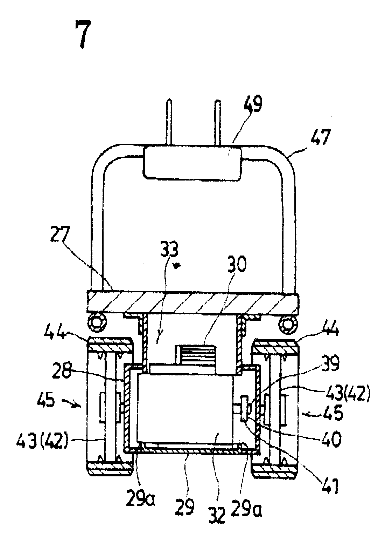

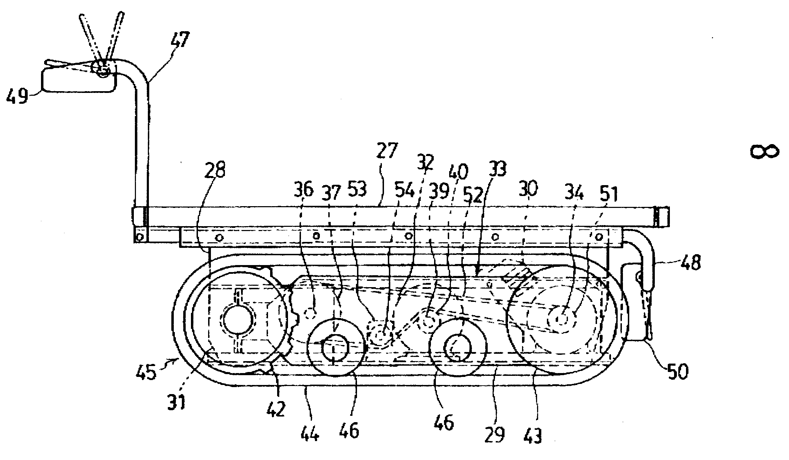

Figs. 5 to 7 show the second embodiment. Reference numeral 27 represents a flat bed plate, and reference numeral 28 represents a frame which is disposed at the lower part of the bed plate. A bottom plate frame 29 is fixed to the lower surface of this frame 28. Both side edge portions 29a, 29b of this bottom plate frame 29 are bent upward to improve mechanical strength. An engine 30 is placed on the bottom plate frame 29 at the center inside the frame 28. A transmission case 31 as travelling power transmission means is disposed at one of the ends of the bottom plate frame 29, and a generator 32 as electric power generation means is placed at the other end of the bottom plate frame 29. In this way, an engine unit 33 is constituted. Since the lower portion of this engine unit 33 is covered by the bottom plate frame 29, it is protected from stones and mud on the ground even if the minimum ground clearance is small.

A two-stage pulley 35 is fitted to the output shaft 34 of the engine 30, and a V-belt 38 is passed around the two-stage pulley 35 and a transmission pulley 37 which is fitted to an input shaft 36 of the transmission case 31. Another V-belt 41 is passed around a generation pulley 40 which is fitted to a rotary shaft 39 of the generator 32 and the two-stage pulley 35. Accordingly, the driving load of the engine 30 is divided to the front and rear and is made uniform, and hence, deviation of the output shaft 34 of the engine to one side is prevented. The generator 32 is driven by the revolution of the engine 30, and the generator 32 is used as the power supply for accessorial materials and devices such as lamps, an electric motor, and so forth.

On the other hand, the revolution of the engine 30 is transmission also to the input shaft 36 of the transmission case 31 and rotates right and left sprockets 42, 42 through reduction gears (not shown) inside the transmission case 31. These sprockets 42, 42 are rotatably fitted to one of the end portions of the frame 28, and crawlers 44, 44 are passed around the sprockets 42, 42 and follower wheels 43, 43 that are pivotally fitted to the other end portion of the frame 28. In this manner, the travelling device 45 is constituted. Incidentally, reference numeral 46 represents a trank roller that is disposed between the sprocket 42 and the follower wheel 43.

Handles 47 and 48 are so disposed at both front and rear end portions of the bed plate 27 as to face each other, and a control panel 49 is fixed at the center of both handles 47, 48 in order to control the engine unit 33 and the travelling device 45 such as the engine 30, the transmission case 31, and so forth. Each of these handles 47, 48 is shaped foldably. When each handle is horizontally turned as indicated by arrow X in Fig. 5 and is further slid to the lower part of the bed plate 27 as indicated by arrow Y, it can be stored. Accordingly, when the machine body is advanced to the right in the same drawing, for example, one 47 of the handles is fixed under the erected state as indicated by solid line, while the other handle 48 is folded. In this way, the field of view in the advancing direction of the bed plate 27 can be secured and at the same time, unloading of cargoes can be easily made from three sides of the bed plate 27. When the machine body is advanced to the left in the same drawing, one 47 of the handles is folded and is stored to the lower part of the bed plate 27 and the other handle 48 is fixed to the erected state as indicated by chain line in the opposite way to the above.

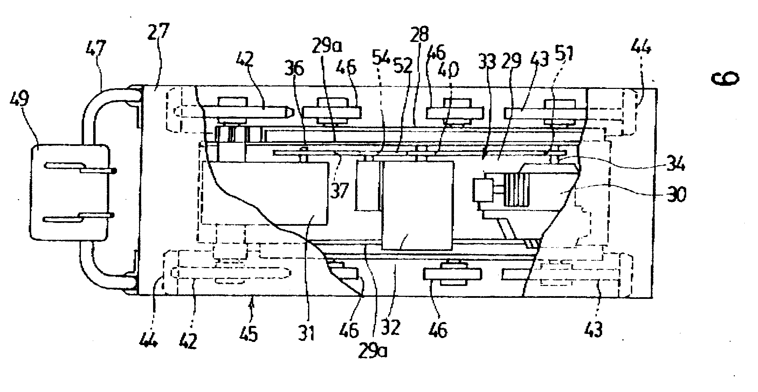

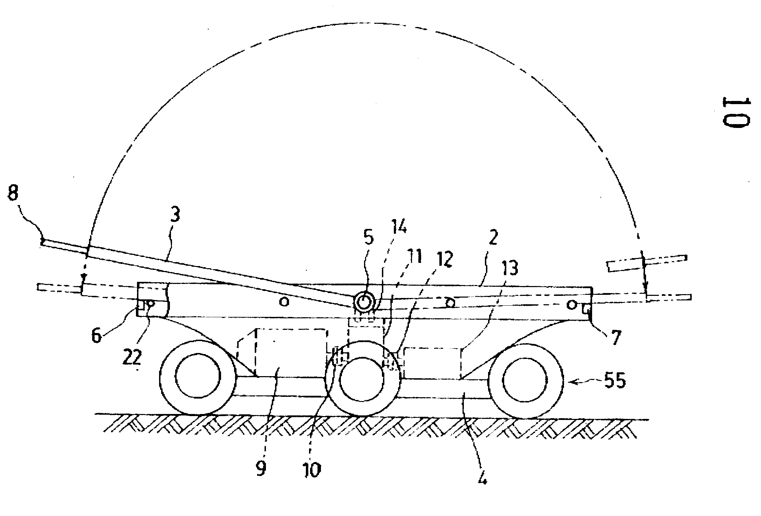

Figs. 8 and 9 show the third embodiment, in which the positions of the engine 30 and the generator 32 of the second embodiment are replaced. A V-belt 52 is passed around the engine pulley 51, the transmission pulley 37 and the generation pulley 40 so as to transmit the power of the engine 30. In such a construction, the engine 30 is positioned at the end portion of the frame 28 and the cooling effect by external air becomes good. A hydraulic pump 53 may be added to the engine unit 33. If the V-belt 52 described above is also passed around the hydraulic pulley 54 so as to transmit the power of the engine 30, a hydraulic cylinder for elevating or tilting the bed plate 27, for example, can also be operated.

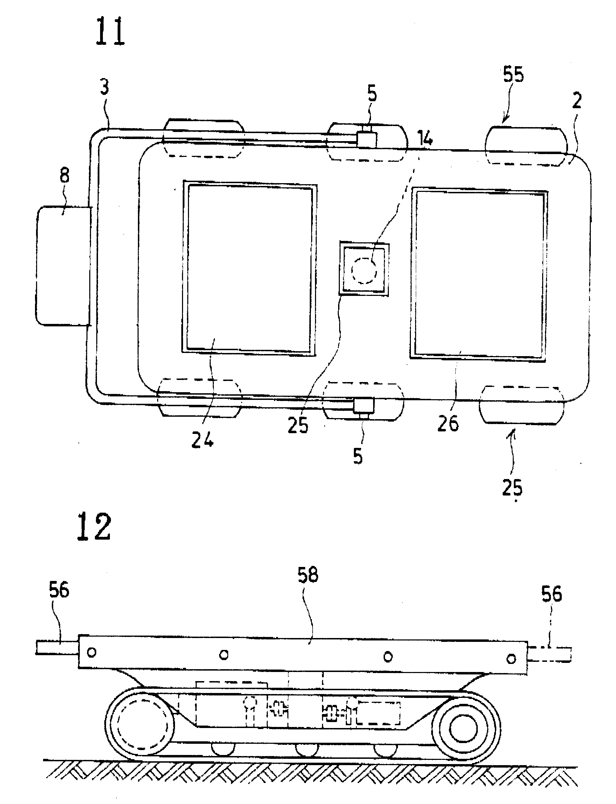

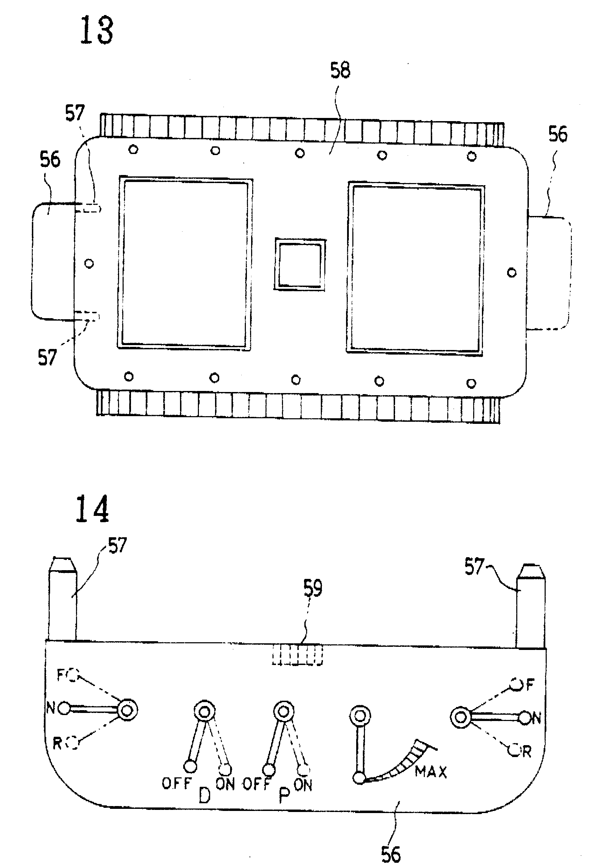

Figs. 10 and 11 show the fourth embodiment. Whereas the travelling device 1 in the aforementioned first embodiment is of the crawler type, the travelling device 55 in this embodiment is of a wheel type, and the rest of construction and operation are exactly the same as those of the first embodiment. The self-propelling service car of this kind is used at the service site having a narrow space and its entrace route is often narrow. Therefore, the width of the machine body is preferably small. For this reason, the travelling device 55 is preferably of a skid steering system but depending on the applications, it may be of a front wheel steering type, a rear wheel steering type or a front-and-rear wheel steering type in the same way as an ordinary construction equipment.

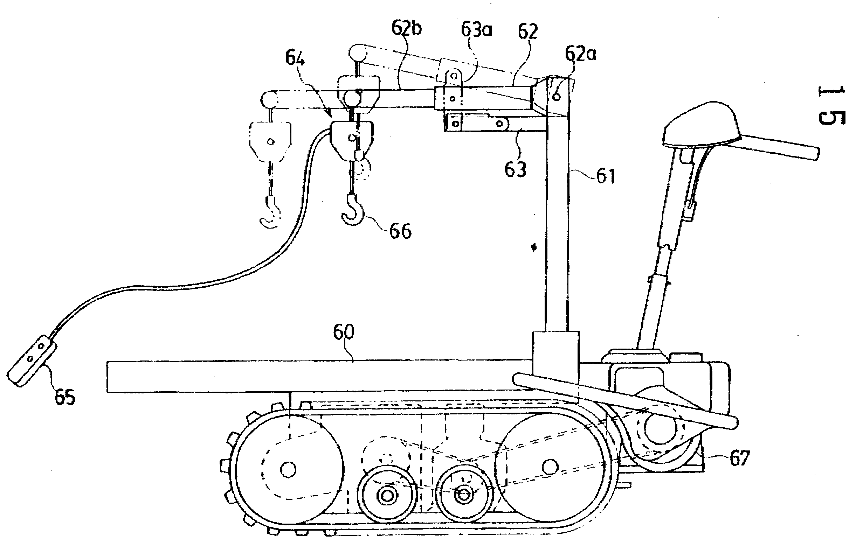

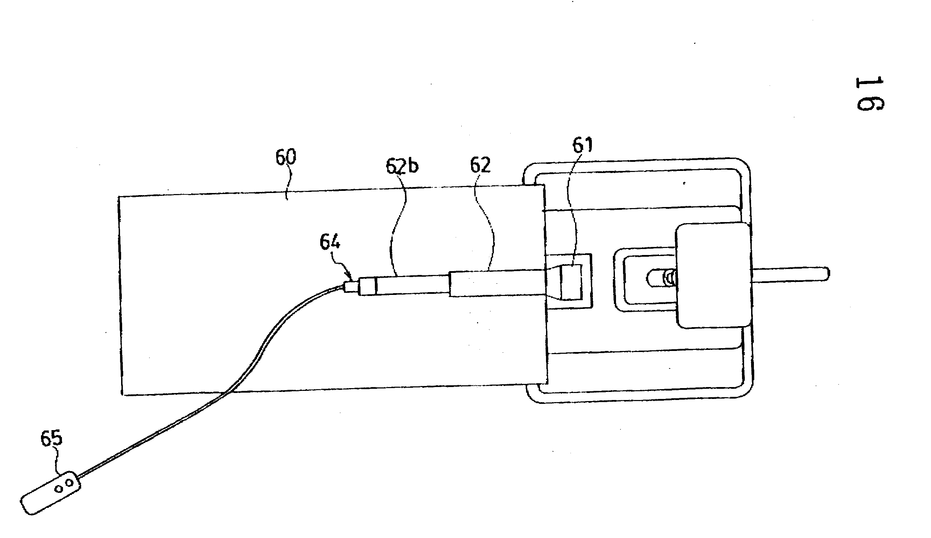

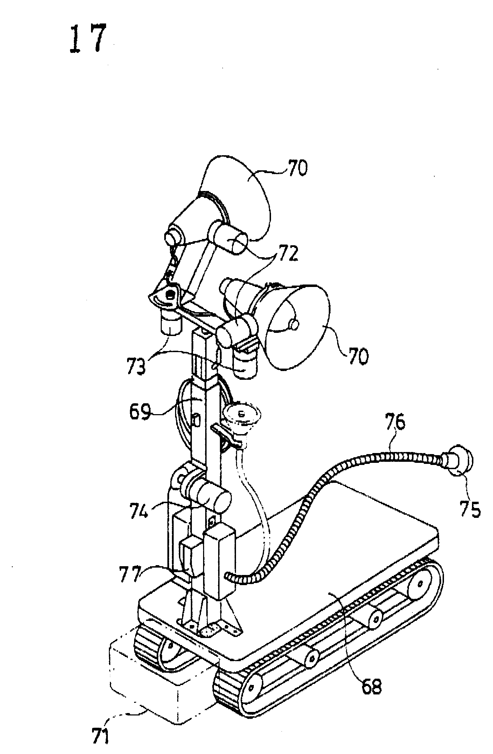

Figs. 12 to 14 show the fifth embodiment, wherein fitting legs 57, 57 disposed on the right and left sides of the control panel 56 can be removably fitted to the front and rear surfaces of the bed plate 58. When the control panel 56 is fitted to the bed plate 58, the instruction signal for each controller is transmitted to each equipment through a coupler 59. Therefore, a safe and reliable operation can be carried out even when the control panel 56 is again fitted to the side suitable for the travelling direction of the machine body. The travelling device may be of a wheel type besides the crawler type.

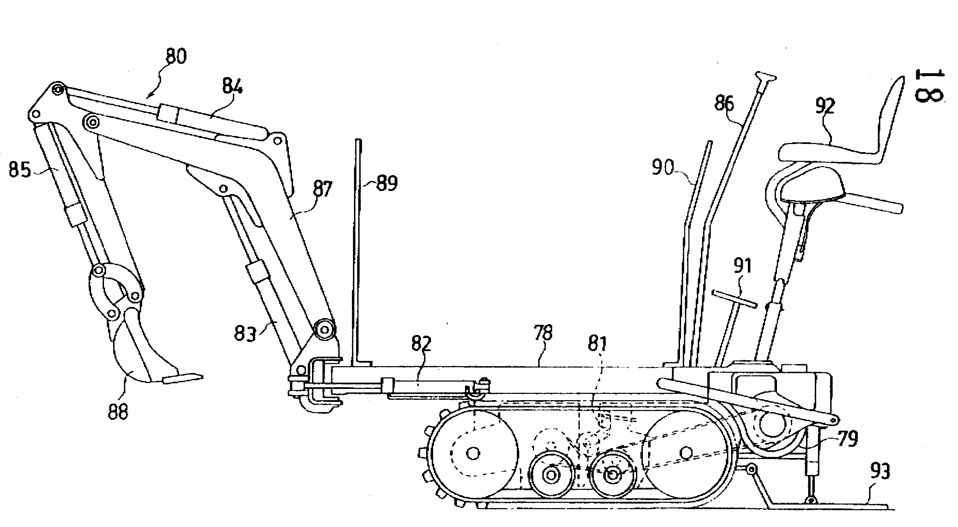

Figs. 15 and 16 show the sixth embodiment, wherein a support pole 61 is implanted rotatably in a horizontal direction to one of the end portions of the bed plate 60 and an arm 62 is so disposed at the upper end of the support pole 61 as to protrude therefrom. This arm can freely rotate up and down with a pivot portion 62a as the center. When the tip portion 63a of a support plate 63, which protrudes from the lower part of the arm 62, is rotated and erected, the arm 62 can be fixed under the upwardly lifted state. The tip portion 62b of the arm 62 is shaped to be contractile and an electric hoist 64 as suspension means is suspended from the tip portion 62b. The electric hoist 64 can move up and down a hook 66 when a motor (not shown) disposed at the lower part of the support pole 61 is rotated by the operation of a remote controller 65. Incidentally, the rotation of the support pole 61 in the horizontal direction and the elevation of the arm 62 can be effected by motor driving, as well.

When cargoes having a heavy weight are loaded to the bed plate 60, the support plate 61 described above is rotated and at the same time, the tip portion 62b of the arm is slid so that the hook 66 is moved to the upper position of the cargoes (not shown) existing on the side of the bed plate 60. Next, the hook 66 is lowered by operating the remote controller 65 and after the cargoes are suspended, the hook 66 is raised to lift up the cargoes. Then, the support pole 61 is rotated and the tip portion 62b of the arm is slid so as to move the cargoes to a suitable position of the bed plate 60. Thereafter, the hook 66 is lowered and the cargoes are placed to the bed plate 60.

When the cargoes having a heavy weight are unloaded from the bed plate 60, on the other hand, the reverse operation to the operation described above is carried out and this way, the labor for loading and unloading the cargoes can be reduced. When a cargo having a large height is loaded and unloaded, the tip portion 63a of the afore-mentioned support plate is erected and then the tip portion 62b of the arm reaches a high position, so that a margin is defined between the cargo and the hook 66 and the suspension operation can be made smoothly. The electric hoist 64 is operated by the electric power generated by driving of the generator 67, and the electric power of this generator 67 can also be used as the power supply for electric tools, electric welding machines, etc, besides the power supply for the electric hoist 64.

Fig. 17 shows the seventh embodiment, wherein search light 70, 70 is fitted to the support pole 69 which is implanted to the bed plate 68. The search light 70 is lit by the supply of the electric power of the generator 71. Vertical movement and transverse rotation of the search light 70 are made by motors 72, 73, and the height of the search light 70 is adjusted by extending and contracting the height of the support pole 69 by a motor 74. Reference numeral 75 represents a service lamp for illuminating the neighboring place. This service lamp 75 can be set to an arbitrary position by adjusting the bend of a flexible pipe 76, and is fixed to the support pole 69 as indicated by chain line at the time of loading and unloading of the cargo. Furthermore, a removable type remote controller 77 is fitted to the support pole 69, and luminance, direction and height of each light source are regulated by operating the remote controller 77 and the advance and stop of the machine body are controlled, too.

In the sixth and seventh embodiments, the generator 67 or 71 is fitted afterwords to the rear part of the bed plate 60 or 68. Therefore, air-permeability for the generator 67 or 71 can be secured and the drop of its performance and life can be prevented. The size of the machine body can be reduced, too, and particularly, the reduction of the size can be made by reducing the grounding length of the crawlers while keeping maneuvering performance. Since the generator 67 or 71 can be easily fitted and removed, the assembly work can be simplified. Furthermore, arbitrary electric appliances besides the projector can be mounted.

Fig. 18 shows the eighth embodiment. A hydraulic pump 79 is disposed at the rear part of the bed plate 78 in place of the generator 67 or 71 of the sixth or seventh embodiment, and an excavator 80 is mounted to the front part of the bed plate 78. The hydraulic pump 79 is rotated by the engine 81 and pressure-feeds a high pressure oil to each hydraulic cylinder 82, 83, 84, 85. An operation lever 86 implanted to the rear part of the bed plate 78 is rotated back and forth and to the right and left to operate a boom 87 and a bucket 88 of the excavator 80 and to carry out the excavation operation. Incidentally, reference numeral 89 in the drawing represents an arm guard; 90 is a lever guard; 91 is a foot step; 92 is a seat; and 93 is a rear step capable of moving up and down.

Incidentally, various changes and modifications can be made in the present invention without departing from the spirit thereof and such changes and modifications are naturally embraced within the scope of the invention.

**Claims**

1. A self-propelling service car including a bed plate supported by a travelling device and having a flat upper surface throughout its full length, and an engine as a power source for driving the travelling device and running power transmission means that are disposed inside a space defined between frames constituting said travelling device and said flat bed plate, and capable of moving back and forth and stopping and changing its direction, characterized in that electric power generation means, mechanical power output means, power transmission means for transmitting the power of said engine to each of said means, and operation means capable of controlling said engine, said travelling device and said power transmission means are disposed inside said space in such a manner that they do not protrude upward from said flat bed plate on the upper surface of the machine body.

2. A self-propelling service car according to claim 1, wherein sprockets receiving the power from said running power transmission means and follower wheels capable of idle rotation are fitted to both sides of a pair of said right and left frames, and a crawler is passed around each of said sprockets and said following wheels in order to constitute said travelling device.

3. A self-propelling service car according to claim 1, wherein an engine unit such as said engine, said running power transmission means, said electric power generation means and said mechanical power output means, is disposed substantially horizontally.

4. A self-propelling service car according to claim 1, wherein there is provided a handle capable of freely turning in a longitudinal direction of the machine body with a shaft protrusively disposed at a substantial center on the side of the machine body as the center, and a control panel equipped with operation means capable of controlling said engine, said travelling device and said power transmission means is provided onto said handle.

5. A self-propelling service car according to claim 1, wherein a control panel equipped with operation means capable of controlling said engine, said travelling device and said power transmission means is removably mounted at a predetermined position on an arbitrary side of the front and rear sides of the machine body in such a manner as not to protrude upward from said flat bed plate on the upper surface of the machine body.

6. A self-propelling service car according to claim 1, wherein support poles are so disposed at an upper part of said flat bed plate as to be capable of rotating in a horizontal direction, arms are protrusively disposed on the side of said support poles, and suspension means for cargoes are disposed on said arms.

Fig. 1

6

7

10

13

58

57

56

56

57

14

57

59

57

F
N
R

OFF D ON OFF P ON

OF
ON
R

MAX

56

15

16

17

18

# INTERNATIONAL SEARCH REPORT

International Application No  PCT/JP91/00733

## I. CLASSIFICATION OF SUBJECT MATTER (if several classification symbols apply, indicate all)

According to International Patent Classification (IPC) or to both National Classification and IPC

Int. Cl$^5$  B60K17/00, B60K17/28, B60K25/06, E01C23/00

## II. FIELDS SEARCHED

### Minimum Documentation Searched

| Classification System | Classification Symbols |
|---|---|
| IPC | B60K17/00, B60K17/28, B60K25/00-25/06, E02F1/00-3/60, E02C23/00-23/16 |

### Documentation Searched other than Minimum Documentation to the Extent that such Documents are Included in the Fields Searched

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT

| Category | Citation of Document, with indication, where appropriate, of the relevant passages | Relevant to Claim No. |
|---|---|---|
| Y | JP, A, 61-98678 (Chubu Electric Power Co., Inc.), May 16, 1986 (16. 05. 86), Figs. 1, 2 (Family: none) | 1, 2, 5 |
| Y | JP, U, 63-23124 (Shinko Electric Co., Ltd.), February 16, 1988 (16. 02. 88) | 1 |
| Y | JP, Y2, 51-7612 (Fuji Robin Industries Ltd.), March 1, 1976 (01. 03. 76) | 1 |
| Y | JP, U, 55-135630 (Seirei Industry Co., Ltd.), September 26, 1980 (26. 09. 80) | 1, 6 |
| A | JP, A, 60-166531 (Iseki & Co., Ltd.), August 29, 1985 (29. 08. 85) | 4 |
| A | JP, U, 59-97160 (Komatsu Forklift Co., Ltd.), July 2, 1984 (02. 07. 84) | |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 26, 1991 (26. 08. 91) | September 9, 1991 (09. 09. 91) |

| International Searching Authority | Signature of Authorized Officer |
|---|---|
| Japanese Patent Office | |

Form PCT ISA/210 (second sheet) (January 1985)